# EUROPÄISCHE PATENTANMELDUNG

(11) **EP 1 006 064 A1**
(43) Veröffentlichungstag der Anmeldung: **07.06.2000**
(21) Anmeldenummer: 99120432.2
(22) Anmeldetag: 14.10.1999
(51) Int. Cl.: B65G 53/46

(54) **Zellenradschleuse**

(30) Priorität: 02.12.1998 DE 19855647; 24.03.1999 DE 19913196
(71) Anmelder: Waeschle GmbH, 88250 Weingarten (DE)
(72) Erfinder: Pfeifer, Kurt, 88682 Salem-Beuren (DE); Lang, Klaus-Peter, 88339 Bad Waldsee (DE)

(57) **Zusammenfassung**

Eine Zellenradschleuse zum Fördern oder Dosieren von Schüttgut umfaßt ein Gehäuse (1) mit einem Zulaufschacht (2), einem Auslaufschacht (3) und einem in einer Gehäusebohrung (4) mittels einer Welle (6) drehbar gelagerten Zellenrad (5), dessen sich im wesentlichen radial erstreckenden Flügel (10) in Verbindung mit koaxial zum Zellenrad angeordneten, scheibenförmigen Kammertrennblechen (15) eine Vielzahl von Kammern (11) ausbilden, von denen zumindest eine an ein Kammertrennblech angrenzende Gruppe von Kammern (11') gegen Schüttguteintritt aus dem Zulaufschacht abdeckbar ist und über Öffnungen (16) in den Kammertrennblechen mit den schüttgutführenden Kammern des Zellenrades kommuniziert. Diese Gruppe von Kammern (11') ist mit einem Druckgasanschluß (18) verbindbar. Die Öffnungen (16) sind bevorzugt im radial innenliegenden Bereich der Kammertrennbleche (15) angeordnet. Es sind insbesondere Mittel (24) zum Einblasen der Zusatzluft in die zu entleerenden Kammern (11'') vorgesehen, mittels derer im wesentlichen über die gesamte axiale Breite der Flügel (10) eine Luftströmung auf den kammerseitigen Flügeloberflächen erzeugbar ist.

## Beschreibung

Die Erfindung betrifft eine Zellenradschleuse zum Fördern oder Dosieren von Schüttgut, umfassend ein Gehäuse mit einem Zulaufschacht, einem Auslaufschacht und einem in einer Gehäusebohrung mittels einer Welle drehbar gelagerten Zellenrad, dessen sich im wesentlichen radial erstreckenden Flügel in Verbindung mit koaxial zum Zellenrad angeordneten, scheibenförmigen Kammertrennblechen eine Vielzahl von Kammern ausbilden, von denen zumindest eine an ein Kammertrennblech angrenzende Gruppe von Kammern gegen Schüttguteintritt aus dem Zulaufschacht abdeckbar ist und über Öffnungen in den Kammertrennblechen mit den schüttgutführenden Kammern des Zellenrades kommuniziert.

Zellenradschleusen werden üblicherweise eingesetzt, um Schüttgut aus einem mit dem Einlaufschacht verbundenen Behältnis zu entnehmen und entweder dosiert in ein mit dem Auslaufschacht kommunizierendes Gefäß zu übergeben oder in eine mit dem Auslaufschacht verbundene, unter Über- oder Unterdruck stehende pneumatische Förderleitung einzuspeisen.

Aus der Patentschrift DE 42 28 014 C1 ist eine gattungsgemäße Zellenradschleuse für granulierte Schüttgüter bekannt. Das mit sich radial erstreckenden Flügeln versehene Zellenrad ist mittig durch zwei koaxial zu seiner Längsachse angeordnete Kammertrennbleche in drei Gruppen von Kammer unterteilt, von denen die axial außenliegenden über den Zulaufschacht mit Schüttgut befüllt werden, während die mittlere Gruppe über einen im Einlaufschacht befindlichen, quer zur Achse des Zellenrades ausgerichteten Steg gegen unmittelbarem Zutritt von Schüttgut aus dem Zulaufschacht abgedeckt ist. Die mittlere Gruppe von Kammern kommuniziert über radial außenliegende Öffnungen in den Kammertrennblechen mit den beiden übrigen Gruppen von Kammern. Bei Drehung des Zellenrades werden über die Mantelfläche des Zellenrades herausragende Granulate von einer Abstreifkante im Zulaufschacht erfaßt und über die Öffnungen den mittleren Kammern zugeführt, um ein Zerschneiden der Granulate zwischen den Flügeln des Zellenrades und den zulaufseitigen Kanten der Gehäusebohrung zu verhindern. Bei einer weiteren Drehung des Zellenrades werden die Granulate aus allen Kammern unter dem Einfluß der Schwerkraft in den Auslaufschacht ausgetragen.

Der vorliegenden Erfindung liegt jedoch ein von dieser Aufgabenstellung vollkommen abweichender Gedanke zugrunde.

Beim Betreiben von Zellenradschleusen ist es wünschenswert, daß sich die Kammern des Zellenrades bei Überdeckung mit dem Auslaufschacht vollständig in diesen entleeren, um eine gute Dosiergenauigkeit beziehungsweise eine hohe Förderleistung zu erzielen. Bei kohäsiven, pulverförmigen Gütern kann der Austrag des Schüttguts aus den Zellen Schwierigkeiten bereiten, da derartige Produkte insbesondere bei Überdruck im Auslaufschacht dazu neigen, sich in den zur Welle hin konisch verengten Zellen des Zellenrades zu verdichten.

In der Auslegeschrift DE 1 756 238 wird eine Zellenradschleuse für adhäsive Schüttgüter offenbart, deren Welle als Hohlkörper ausgebildet und über in diesem angeordnete Ausnehmungen mit den jeweils mit dem Auslaufschacht überdeckten Kammern des Zellenrades verbunden ist. Über eine seitliche Öffnung im antriebsseitigen Wellenende kann der Hohlkörper mit Druckluft beaufschlagt werden, die über die Ausnehmungen das in den Kammern befindliche Schüttgut zum Auslaufschacht hin ausbläst. Diese Vorrichtung ist mit einem erheblichen Bauaufwand verbunden, da die hohle Welle zur Erzielung einer ausreichenden Biegesteifigkeit einen großen Durchmesser aufweisen muß. Ferner muß der Druckluftanschluß am antriebsseitigen Wellenende drehbar abgedichtet werden.

In der Patentschrift DE 707 791 wird vorgeschlagen, die Kammern durch im Auslaufschacht angeordnete, zur Welle des Zellenrades gerichtete Preßluftdüsen auszublasen. Durch dieses Vorgehen läßt sich der mittlere Bereich der Kammern jedoch nur bedingt von anhaftendem Schüttgut befreien, weshalb das Zellenrad nach diesem Stand der Technik eine aufwendige, das Kammervolumen im mittleren Bereich verkleinernde Abkammerung aufweist. Die Leistung einer derartigen Schleuse ist daher begrenzt.

Die Druckschrift DE 609 842 offenbart eine Zellenradschleuse, bei der durch mittig im Kammergrund angeordnete Bohrungen Zusatzluft in Richtung einer sich an die Schleuse anschließenden pneumatischen Förderleitung einblasbar ist. Diese Maßnahme führt bei kohäsiven Schüttgütern teilweise nur zu unbefriedigenden Ergebnissen, da die Zusatzluft häufig nur einen Tunnel in die Schüttgutfüllung bläst, das Schüttgut im Bereich der Flügel jedoch nicht zu lösen vermag.

Die deutsche Auslegeschrift DE 20 41 045 lehrt, auf jeweils einer kammerseitigen Flügeloberfläche röhrenförmige Luftkanäle anzubringen, die bei Drehung des Zellenrads in bestimmten Stellungen mit Druckgasanschlüssen in der Gehäusebohrung verbunden sind, so daß durch die Luftkanäle Druckluft zum Zellengrund geleitet wird. Hierdurch entstehen punktförmige Fluidstrahlen, die an der den röhrenförmigen Luftkanälen gegenüberliegenden Flügelwand Richtung Auslaufschacht entlangstreichen. Dieses Vorgehen führt bei der Förderung kohäsiver Güter nicht immer zum gewünschten Erfolg, da die Maßnahme nur an einer Flügeloberfläche wirkt und das punktförmige Eintreten des Druckgases wiederum nur Teile des Schüttguts aus der Kammer ausbläst.

### Aufgabe

Der Erfindung liegt die Aufgabe zugrunde, eine leistungsfähige und konstruktiv einfach ausgeführte Zellenradschleuse insbesondere für kohäsive Schüttgüter bereitzustellen, deren Kammern zuverlässig entleerbar sind.

### Lösung

Die Aufgabe wird dadurch gelöst, daß die gegen Schüttguteintritt aus dem Zulaufschacht abdeckbare Gruppe von Kammern mit einem Druckgasanschluß verbindbar ist. Über die Öffnungen in den Kammertrennblechen kann diese Druckluft gezielt in die produktführenden Kammern eingespeist werden, wodurch das Schüttgut in den Auslaufschacht ausgetragen wird. Insbesondere ist dabei durch Mittel zum Einblasen von über den Druckgasanschluß zuführbarer Zusatzluft im wesentlichen über die gesamte axiale Breite der Flügel eine Luftströmung auf der kammerseitigen Flügeloberflächen erzeugbar.

Die abhängigen Ansprüche betreffen bevorzugte Ausführungsformen der Schleuse, die anhand der Figuren ausführlich erläutert werden.

### Figuren

Die Figuren stellen beispielhaft und schematisch erfindungsgemäß ausgestaltete Zellenradschleusen im Längs- und Querschnitt sowie Aufsichten und Schnitte der zugehörigen Zellenräder dar.

Es zeigen:
- Fig. 1: eine Zellenradschleuse nach Anspruch 7 und 14
- Fig. 2: ein Zellenrad aus der Schleuse nach Fig. 1
- Fig. 3: eine weitere erfindungsgemäß ausgestaltete Schleuse nach Anspruch 4
- Fig. 4: ein halbseitig geschnittenes Zellenrad aus der Schleuse nach Fig. 3
- Fig. 5: eine Zellenradschleuse mit einem axial mehrfach segmentierten Zellenrad
- Fig. 6: ein halbseitig geschnittenes Zellenrad aus der Schleuse nach Fig. 5
- Fig. 7: eine Zellenradschleuse nach einer weiteren Ausgestaltung gemäß Anspruch 8
- Fig. 8: ein halbseitig geschnittenes Zellenrad aus der Schleuse nach Fig. 7
- Fig. 9: eine weitere erfindungsgemäße Zellenradschleuse nach Anspruch 9
- Fig. 10: eine graphische Darstellung des Füllgrads einer erfindungsgemäßen Schleuse nach Fig. 2 und 3 im Vergleich zum Stand der Technik
- Fig. 11: eine Zellenradschleuse nach dem Stand der Technik

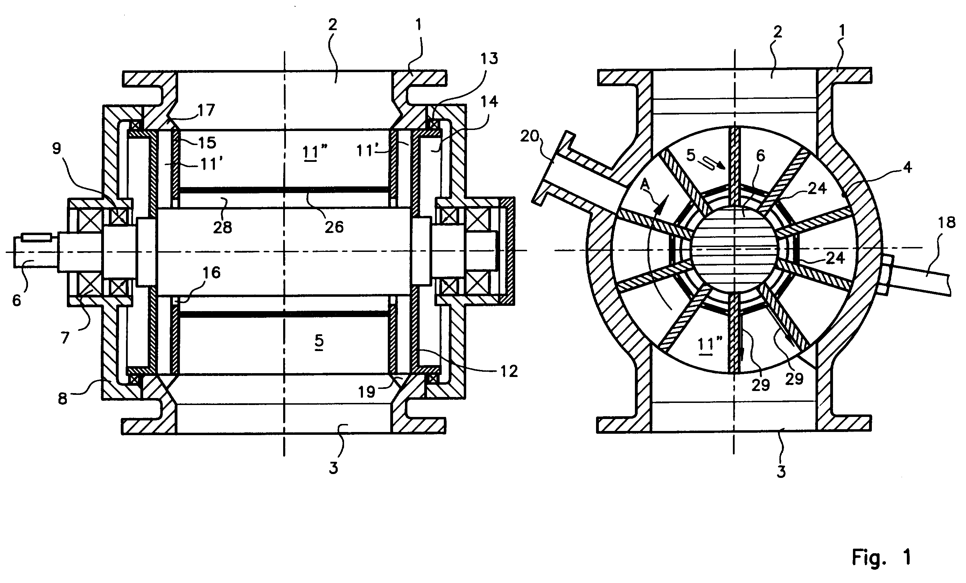

Die in Figur 1 abgebildete Zellenradschleuse besteht aus einem Gehäuse 1 mit einem Zulaufschacht 2 für die Zufuhr von Schüttgut und einem Auslaufschacht 3 für den Austrag des Schüttgutes, beispielsweise in eine nicht dargestellte pneumatische Druckförderleitung. Das Gehäuse 1 ist mit einer zylindrischen Gehäusebohrung 4 versehen, in der ein Zellenrad 5 in Richtung des Pfeiles A drehbar gelagert ist. Es stützt sich über eine Welle 6 und Lager 7 beidseitig in Seitendeckeln 8 ab, welche die Gehäusebohrung 4 seitlich verschließen. Dichtungselemente 9 dichten die Gehäusebohrung 4 zu den Lagern 7 hin ab.

Von der Welle 6 erstrecken sich radial nur über einen geringen Spalt von der Gehäusebohrung 4 beabstandete Flügel 10, die eine Vielzahl von Kammern 11 ausbilden.

Das Zellenrad ist seitlich mit Bordscheiben 12 versehen, deren Umfang zu den Seitendeckeln 8 hin über weitere Dichtungselemente 13 gedichtet wird. Der Ringraum 14 zwischen Bordscheibe 12 und Seitendeckel 8 kann mit einem Sperrgas beaufschlagt werden.

Das Zellenrad 5 weist in einem Abstand zu den Bordscheiben 12 Kammertrennbleche 15 auf, die koaxial zur Längsachse des Zellenrades 5 angeordnet sind. Sie unterteilen die durch die Flügel 10 gebildeten Kammern 11 in zwei schmale, seitliche und eine breite, mittlere Gruppe von Kammern 11. Jede seitliche Kammer 11' kommuniziert über eine nahe der Welle 6 befindliche Öffnung 16 mit einer mittleren Kammer 11''. In der mittleren Kammer 11'' sind am radial innenliegenden Ende der Flügel 10 Luftdüsen 24 angeordnet, die sich beidseitig in axialer Richtung schlitzförmig entlang der kammerseitigen Flügeloberfläche erstrecken. Die Luftdüsen 24 werden durch ein in der Kammer angeordnetes Distanzblech 26 gebildet, das zum von der Welle 6 des Zellenrads 5 gebildeten Kammergrund 25 beabstandet und partiell über Verbindungsstege 27 mit den Flügeln 10 verbunden ist, so daß sich zwischen Kammergrund 25 und Distanzblech 26 ein Luftkanal 28 ausbildet. Die Zusatzluft wird der jeweils auszublasenden Kammer 11'' durch den Luftkanal 28 zugeführt und tritt über die schlitzförmigen Luftdüsen 24 in den schüttgutgefüllten Teil der Kammer 11'' ein, wobei der zur Flügeloberfläche im wesentlichen parallele, radial nach außen gerichtete Luftstrahl 29 das Schüttgut von der Oberfläche der Flügel 10 löst. Das Schüttgut fällt daraufhin beispielsweise in Form eines kompakten Schüttgutpfropfens in den Auslaufschacht 3.

Der Zulaufschacht 2 des Gehäuses 1 ist im Bereich der Gehäusebohrung 4 mit seitlichen Vorsprüngen 17 versehen, welche die seitlichen Kammern 11' gegen aus dem Zulaufschacht 2 zulaufendes Schüttgut abdecken und weitgehend schüttgutfrei halten, während die mittleren Kammern 11'' mit Schüttgut befüllbar sind, das bei Drehung des Zellenrades 5 in den Auslaufschacht 3 entleert wird.

Derweil werden die jeweils zum Auslaufschacht 3 hin drehenden Kammern 11' an zwei radial im Gehäuse 1 vorgesehenen Druckgasanschlüssen 18 vorbeigeführt und mit einem Druck beaufschlagt, der über dem Druck im Auslaufschacht 3 liegt. Das Volumen der jeweiligen Kammer 11' und des zugeordneten Luftkanals 28 dienen dabei als Druckgasspeicher. Sobald eine der mittleren Kammern 11'' mit dem Auslaufschacht 3 verbunden wird, tritt aus den zugeordneten seitlichen Kammern 11' und dem Luftkanal 28 sich entspannendes Druckgas über die Luftdüsen 24 in die mittlere Kammer 11'' ein und bläst das dort befindliche Schüttgut in den Auslaufschacht 3 aus. Seitlich im Auslaufschacht 3 auf dem Umfang der Gehäusebohrung 4 angeordnete Vorsprünge 19 verhindern, daß das Druckgas vorab wirkungslos in den Auslaufschacht 3 entweichen kann. Im Gegensatz zu den Vorsprüngen 17 im Einlaufschacht 2 reichen die Vorsprünge 19 nur über einen Teil des Umfangs der Gehäusebohrung 4 im Auslaufschachtes 3 herum, damit trotz Abdeckung in die seitlichen Kammern 11' eingetragene Schüttgut- und Staubpartikel in den Auslaufschacht 3 ausgetragen werden können.

Das von den Kammern 11 aus dem Auslaufschacht 3 aufgenommene Fördergas wird nachfolgend über eine Entlüftungsöffnung 20 auf den Druck im Zulaufschacht 2 entspannt.

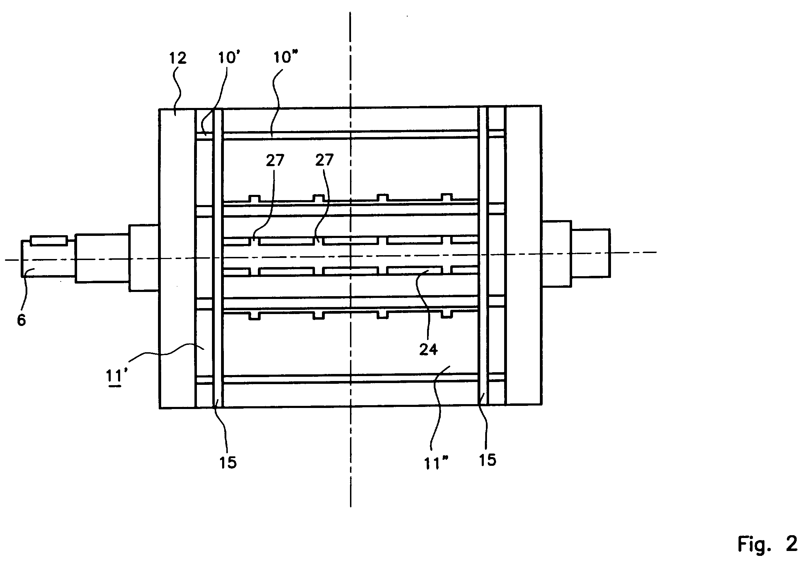

Figur 2 zeigt ein geeignetes Zellenrad 5. Da die Vorsprünge 19 im Gehäuse 1 ein vorzeitiges Entweichen des in den seitlichen Zellen 11' befindlichen Druckgases verhindern, können die Flügel 10' der seitlichen Kammern 11' und die Flügel 10'' der mittleren Kammern 11'' jeweils miteinander fluchten.

Es ist zwar günstig, aber keinesfalls zwingend erforderlich, mit Druckgas beaufschlagbare Kammern 11' beiderseits der mittleren Kammern 11'' anzuordnen. Die Erfindung umfaßt selbstverständlich auch die einseitige Ausführung.

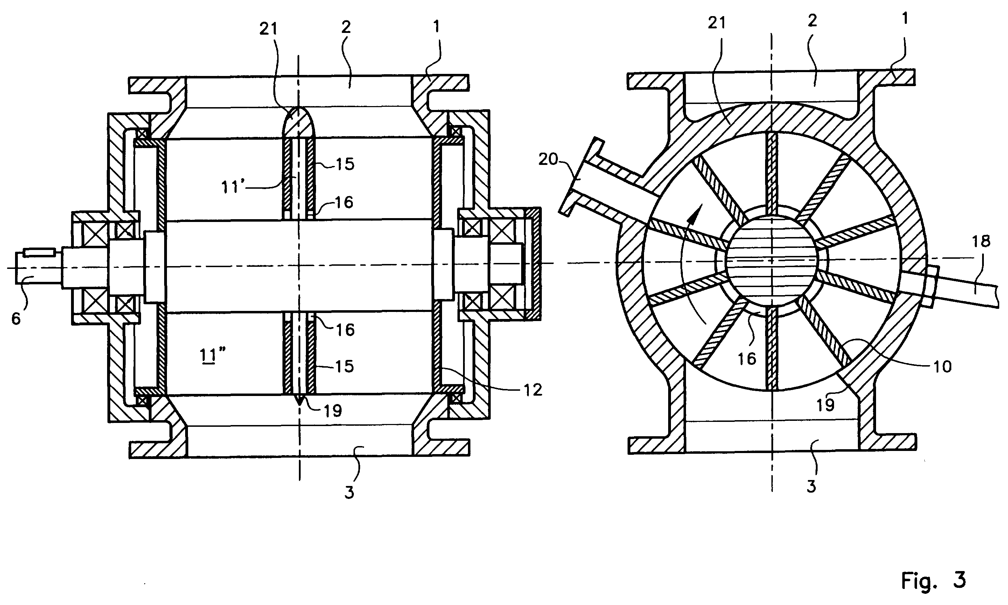

Die Zellenradschleuse nach Figur 3 unterscheidet sich von der zuvor beschrieben Schleuse in der Weise, daß auf die Verwendung von Distanzblechen 26 und Luftdüsen 24 verzichtet wurde, so daß das zum Ausblasen dienende Druckgas direkt seitlich über die Öffnungen 16 in die zu entleerenden Kammern 11'' eintritt. Außerdem sind die Kammertrennbleche 15 zur Mitte hin versetzt und trennen eine schmale Gruppe von Kammern 11' ab, die durch einen dachförmigen, gegenüber der Längsachse des Zellenrades um 90° gedrehten Steg 21 im Zulaufschacht 2 gegen das Eindringen von Schüttgut abgedeckt werden. Die Befüllung erfolgt in die breiten seitlichen Kammern 11'', die beim Erreichen des Auslaufschachts 3 über die Öffnungen 16 ausgeblasen werden. Ein in der Mittelebene des Auslaufschachts 3 angeordneter Vorsprung 19 verhindert wiederum das vorzeitige Entweichen des Druckgases.

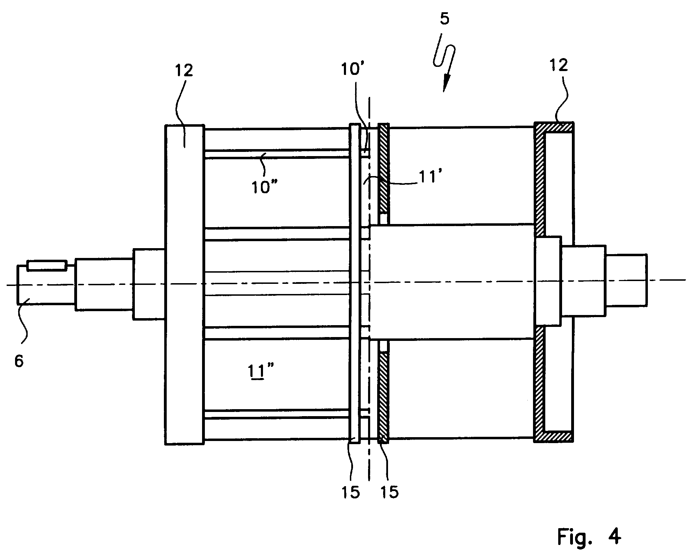

Wie aus Figur 4 ersichtlich, kann ein geeignetes Zellenrad 5 ebenfalls Flügel 10', 10'' aufweisen, die beiderseits der Kammertrennbleche 15 miteinander fluchten.

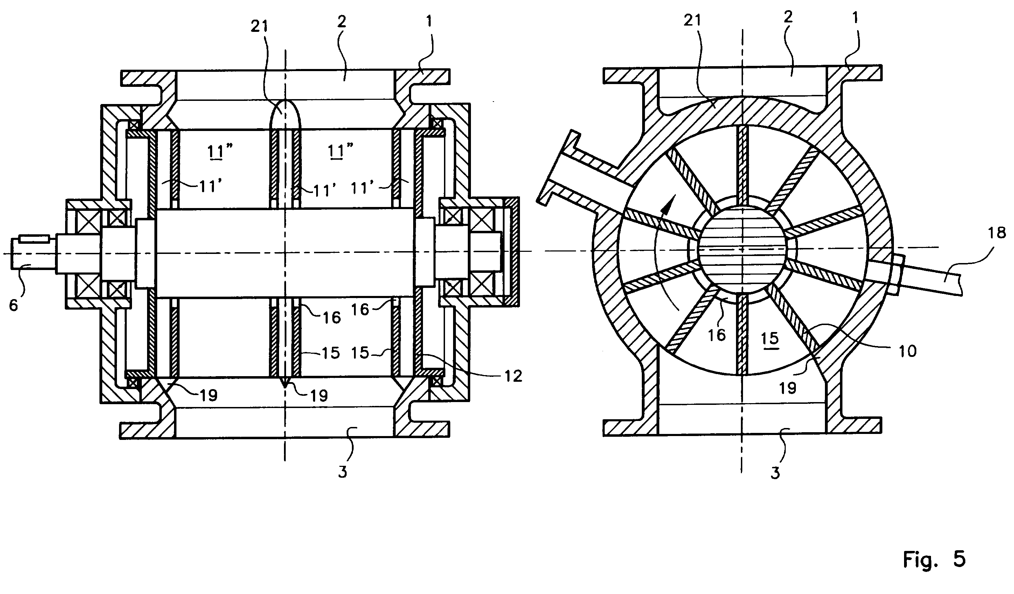

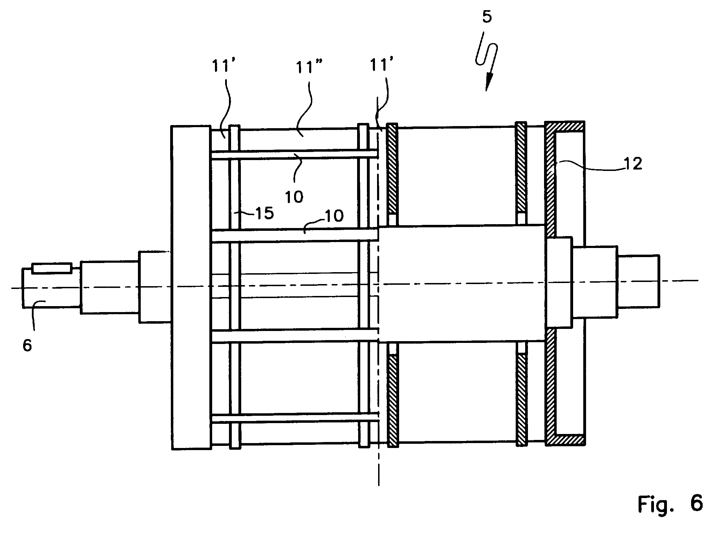

In der Zellenradschleuse nach Figur 5 und 6 sind die Merkmale der zuvor dargestellten Schleusen in der Weise kombiniert, daß durch insgesamt vier Kammertrennbleche fünf Gruppen von Kammern 11 gebildet werden, von denen die mittleren und die außenliegenden Kammern 11' mit dem Druckgasanschlüssen 18 verbindbar sind.

Abweichend von den zuvor gezeigten Ausführungen sind bei dem Zellenrad 5 nach Figur 6 die Flügel 10 durchgehend gefertigt, während sich die scheibenförmigen Kammertrennbleche 15 aus einer Vielzahl zwischen den Flügeln 10 eingefügten Kreissektoren zusammensetzen.

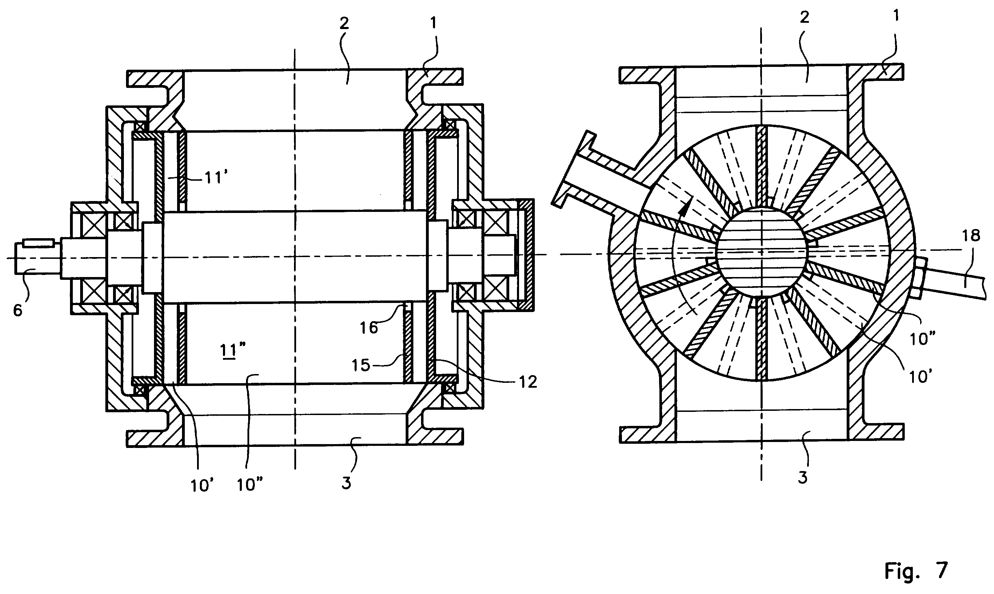

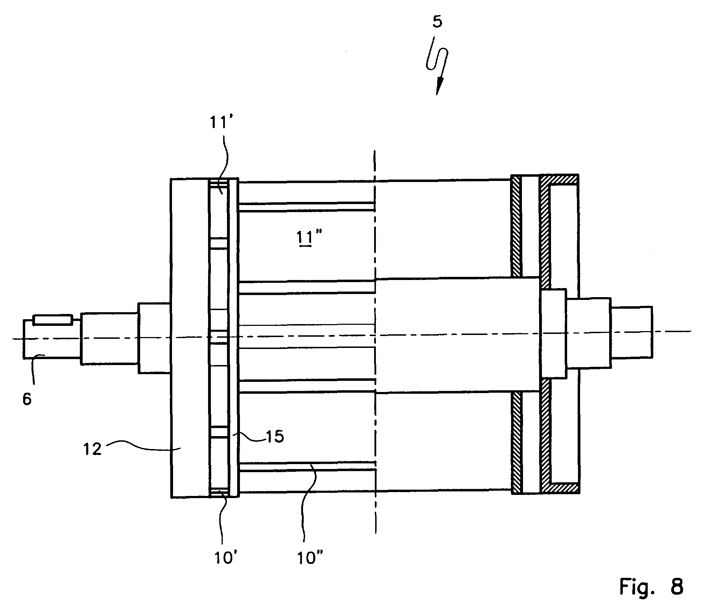

Um auf die Vorsprünge 19 im Auslaufschacht 3 zu verzichten, kann das Zellenrad 5 gemäß Figur 7 und 8 ausgebildet werden. Die Flügel 10' der mit dem Druckgasanschluß 17 verbindbaren Kammern 11' sind gegenüber den Flügeln 10'' der Schüttgut fördernden Kammern 11'' in der Weise versetzt, daß die Kammern 11' radial noch vom Umfang der Gehäusebohrung 4 gedichtet werden, während die mit ihnen über die Offnungen 16 kommunizierende Kammer 11'' bereits mit dem Auslaufschacht 3 verbunden ist. Die Flügel 10' und 10'' liegen in diesem Fall nicht mehr in einer Flucht. Eine derartiges Zellenrad 5 kann gegebenenfalls in ein nur geringfügig abzuänderndes konventionelles Gehäuse 1 eingesetzt werden.

Selbstverständlich ist es auch dabei möglich, analog zu Figur 5 und 6 weitere Kammertrennbleche 15 vorzusehen. Ebenso ist die Anordnung der zuvor beschriebenen Luftdüsen 24 durch den Einbau von Distanzblechen 26 möglich.

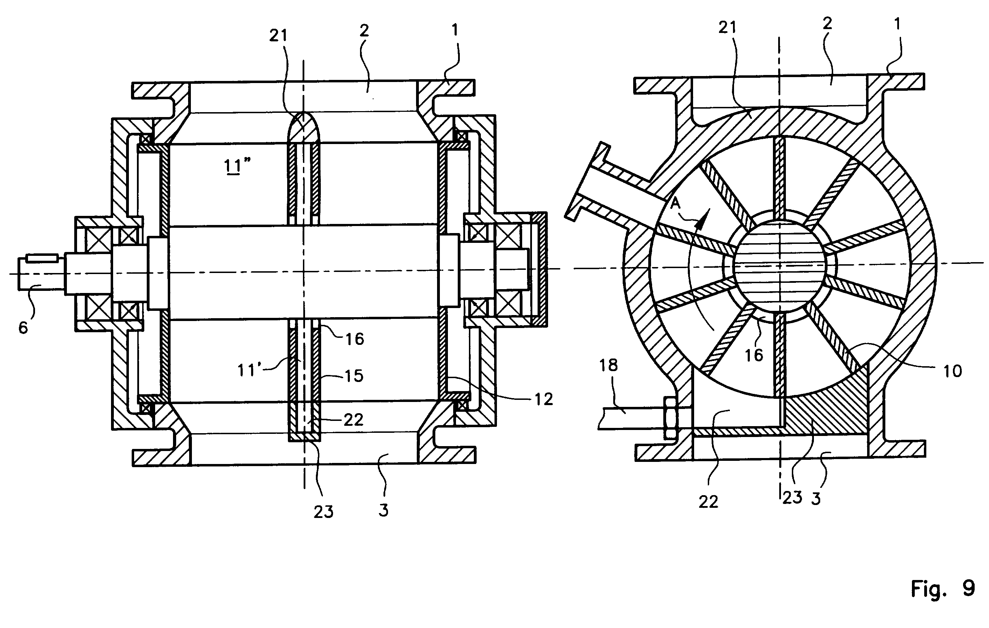

In der Ausführung nach Figur 9 wird das Druckgas über den Druckgasanschluß 18 in einen Kanal 22 eingespeist, der sich in einem im Auslaufschacht 3 quer zur Längsachse des Zellenrades 5 angeordneten Steg 23 befindet und mit den im wesentlichen produktfreien Kammern 11' verbindbar ist. Über die Öffnungen 16 bläst das Druckgas die produktführenden Kammern 11'' aus.

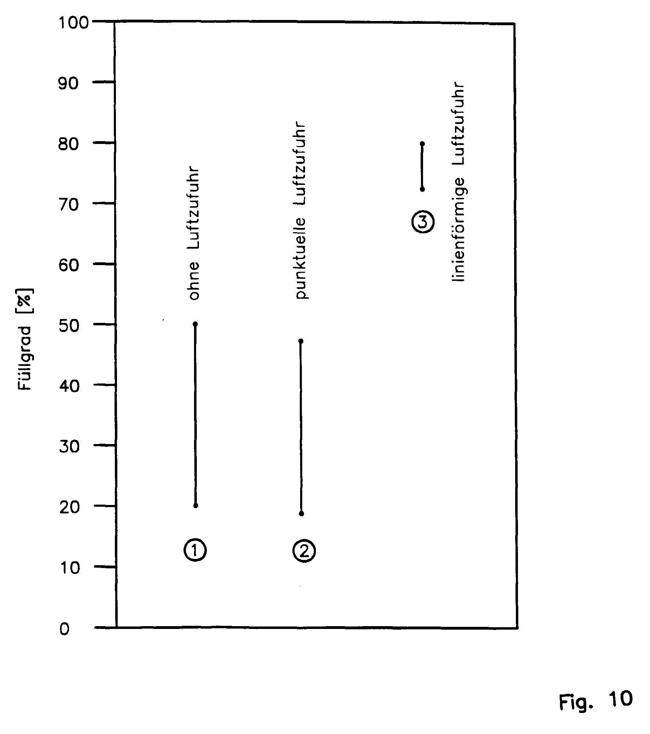

Fig. 10 zeigt eine graphische Gegenüberstellung der Füllgrade einer Zellenradschleuse nach Figur 1 und einer herkömmlichen Zellenradschleusen, jeweils mit einem Rotordurchmesser von 480 mm. Gefördert wurde pulverförmiges PTA (Polytherephtalsäure), das eine hohe Kohäsivität aufweist.

Unter dem Füllgrad versteht der Fachmann das Verhältnis zwischen tatsächlicher Förderleistung der Zellenradschleuse und der theoretischen maximalen Förderleistung bei vollständiger Füllung bzw. Entleerung der Kammern des Zellenrads. Das Gesamtkammervolumen des Zellenrads betrug in allen Fällen etwa 56 Liter.

Zellenradschleusen ohne Ausblasen (Meßschrieb 1) und Zellenradschleusen mit punktueller Luftzufuhr zum Ausblasen der Kammern (Meßschrieb 2) unterscheiden sich bei diesem Versuch in der förderbaren Schüttgutmenge kaum. In beiden Fällen lassen sich nur unbefriedigende Füllgrade von 20% bis 50% realisieren. Um eine vorgegebene Schüttgutmenge fördern zu können, muß das Zellenrad daher zwei- bis fünfmal größer ausgeführt werden als theoretisch erforderlich.

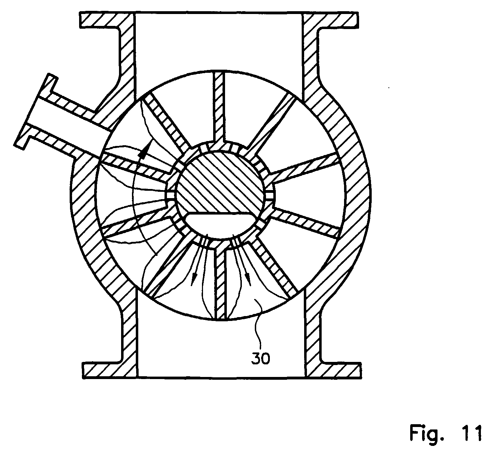

Durch das punktuelle Einblasen der Zusatzluft kann die Kammerentleerung zwar in vielen Fällen verbessert werden, diese Maßnahme ist aber bei diesem pulverförmigen, stark kohäsiven Prüfgut nicht ausreichend. Wie in Figur 11 dargestellt, bläst die Zusatzluft bei diesem Produkt nur einen Tunnel 30 in die Schüttgutfüllung der Kammer 11'', so daß ein erheblicher Teil des an den Flügelwandungen anhaftenden Schüttguts in der Kammer 11'' verbleibt. Dieses Schüttgut kann bei einer weiteren Drehung des Zellenrads 5 einerseits in unerwünschter Weise über die Entlüftungsöffnung 20 abgeführt werden oder das zur Befüllung nutzbare Kammervolumen beim erneuten Erreichen des Zulaufschachts 2 verringern.

Durch ein linienförmiges Einblasen der Zusatzluft über die gesamte axiale Flügelbreite (Meßschrieb 3) läßt sich der Füllgrad bei diesem Prüfgut auf 70% bis 80% erhöhen und nimmt damit Werte an, die auch bei weniger kohäsiven Schüttgütern üblicherweise erreicht werden.

Die Erfindung ist nicht auf die im Detail beschriebenen Ausführungsbeispiele beschränkt, sondern umfaßt alle nichterfinderischen Weiterbildungen. Insbesondere umfaßt sie auch Zellenräder von nichtzylindrischer, beispielsweise konischer Gestalt. Auch müssen die Flügel nicht in Richtung der Erzeugenden des Zellenrades verlaufen, sondern können auch schräg oder pfeilförmig ausgebildet sein. Es ist ferner denkbar, die Drehachse des Zellenrads nicht nur horizontal, sondern auch vertikal oder in beliebiger Weise geneigt auszuführen. Auch kann die Lage des Druckgasanschlusses sehr unterschiedlich ausgeführt werden, ohne die patentgewollte Wirkung zu beeinträchtigen. Beim Einsatz in Systemen, die in einer Atmosphäre aus Prozeß- oder Inertgas betrieben werden, kann selbstverständlich anstelle von Luft auch ein geeignetes anderes Gas zum Ausblasen der Kammern verwendet werden.

### Bezugszeichenliste

- 1: Gehäuse
- 2: Zulaufschacht
- 3: Auslaufschacht
- 4: Gehäusebohrung
- 5: Zellenrad
- 6: Welle
- 7: Lager
- 8: Seitendeckel
- 9: Dichtungselement (für Welle)
- 10: Flügel
- 11: Kammer
- 12: Bordscheibe
- 13: Dichtungselement (für Bordscheibe)
- 14: Ringraum
- 15: Kammertrennblech
- 16: Öffnung
- 17: Vorsprung (im Zulaufschacht)
- 18: Druckgasanschluß
- 19: Vorsprung (im Auslaufschacht)
- 20: Entlüftungsöffnung
- 21: Steg (im Zulaufschacht)
- 22: Kanal
- 23: Steg (im Auslaufschacht)
- 24: Luftdüse
- 25: Kammergrund
- 26: Distanzblech
- 27: Verbindungssteg
- 28: Luftkanal
- 29: Luftstrahl
- 30: Tunnel

## Patentansprüche

1. Zellenradschleuse zum Fördern oder Dosieren von Schüttgut, umfassend ein Gehäuse (1) mit einem Zulaufschacht (2), einem Auslaufschacht (3) und einem in einer Gehäusebohrung (4) mittels einer Welle (6) drehbar gelagerten Zellenrad (5), dessen sich im wesentlichen radial erstreckenden Flügel (10) in Verbindung mit koaxial zum Zellenrad angeordneten, scheibenförmigen Kammertrennblechen (15) eine Vielzahl von Kammern (11) ausbilden, von denen zumindest eine an ein Kammertrennblech angrenzende Gruppe von Kammern (11') gegen Schüttguteintritt aus dem Zulaufschacht abdeckbar ist und über Öffnungen (16) in den Kammertrennblechen mit den schüttgutführenden Kammern des Zellenrades kommuniziert, dadurch gekennzeichnet, daß diese Gruppe von Kammern (11') mit einem Druckgasanschluß (18) verbindbar ist.

2. Zellenradschleuse nach Anspruch 1, dadurch gekennzeichnet, daß die Öffnungen (16) im radial innenliegenden Bereich der Kammertrennbleche (15) angeordnet sind.

3. Zellenradschleuse nach Anspruch 2, dadurch gekennzeichnet, daß die Öffnungen (16) aus einer radialen Beabstandung zwischen der Welle (6) und dem jeweiligen Kammertrennblech (15) besteht.

4. Zellenradschleuse nach einem der Ansprüche 1 bis 3, dadurch gekennzeichnet, daß eine insbesondere mittig im Zellenrad angeordnete, mit dem Druckgasanschluß (18) verbindbare Gruppe von Kammern (11') beidseitig an ein Kammertrennblech (15) angrenzt und durch einen im Zulaufschacht (2) befindlichen, im wesentlichen quer zu Längsachse des Zellenrades (6) ausgerichteten Steg (21) gegen Schüttguteintritt abdeckbar ist.

5. Zellenradschleuse nach einem der vorhergehenden Ansprüche, dadurch gekennzeichnet, daß zwei seitlich am Zellenrad (5) angeordnete, mit dem Druckgasanschluß (18) verbindbare Gruppen von Kammern (11') jeweils an ein Kammertrennblech (15) und eine Bordscheibe (12) angrenzen und durch seitlich im Zulaufschacht (2) befindliche Vorsprünge (17) gegen Schüttguteintritt abdeckbar sind.

6. Zellenradschleuse nach einem der vorhergehenden Ansprüche, dadurch gekennzeichnet, daß im Auslaufschacht (3) Vorsprünge (19) angeordnet sind, welche die mit dem Druckgasanschluß (18) verbindbaren Kammern (11') partiell abdecken.

7. Zellenradschleuse nach einem der vorhergehenden Ansprüche, dadurch gekennzeichnet, daß die Flügel (10', 10'') der Kammern (11', 11'') miteinander fluchten.

8. Zellenradschleuse nach einem der Ansprüche 1 bis 6, dadurch gekennzeichnet, daß die Flügel (10') der mit dem Druckgasanschluß (18) verbindbaren Kammern (11') und die Flügel (10'') der mit Schüttgut befüllbaren Kammern (11'') in der Weise gegeneinander versetzt sind, daß die mit dem Druckgasanschluß verbindbare Kammer (11') noch über den Umfang der Gehäusebohrung (4) zum Auslaufschacht (4) hin abdichtbar ist, während die zugeordnete, mit Schüttgut befüllbare Kammer (11'') bereits in den Auslaufschacht (3) entleerbar ist.

9. Zellenradschleuse nach Anspruch 4, dadurch gekennzeichnet, daß die beidseitig an ein Kammertrennblech (15) angrenzende Gruppe von Kammern (11') über einen mit einem Kanal (22) versehenen, im wesentlichen quer zur Längsachse des Zellenrades angeordneten Steg (23) im Auslaufschacht (3) mit dem Druckgasanschluß (18) verbindbar ist.

10. Zellenradschleuse zum Fördern oder Dosieren von Schüttgut, insbesondere nach einem der vorhergehenden Ansprüche, umfassend einen Zulaufschacht (2), einen Auslaufschacht (3) und ein Gehäuse (1) mit einem in einer Gehäusebohrung (4) drehbar angeordneten Zellenrad (5), dessen Kammern (11) durch sich radial erstreckende Flügel (10) gebildet werden, wobei die Kammern des Zellenrads Mittel zum Einblasen von über einen Druckgasanschluß (18) zuführbarer Zusatzluft aufweisen, wenn die Kammern mit dem Auslaufschacht in Überdeckung stehen, dadurch gekennzeichnet, daß durch die Mittel (24) zum Einblasen der Zusatzluft im wesentlichen über die gesamte axiale Breite der Flügel (10) eine Luftströmung auf der kammerseitigen Flügeloberfläche erzeugbar ist.

11. Zellenradschleuse nach Anspruch 10, dadurch gekennzeichnet, daß die Luftströmung auf beiden kammerseitigen Flügeloberflächen erzeugbar ist.

12. Zellenradschleuse nach Anspruch 10 oder 11, dadurch gekennzeichnet, daß die Mittel zum Einblasen der Zusatzluft am radial innenliegenden Ende der Flügel (10) angeordnete Luftdüsen (24) umfassen.

13. Zellenradschleuse nach Anspruch 12, dadurch gekennzeichnet, daß die Luftdüsen (24) in axialer Richtung schlitzförmig ausgebildet sind.

14. Zellenradschleuse nach Anspruch 12 oder 13, dadurch gekennzeichnet, daß die Luftdüsen (24) entlang der Seitenflächen eines in der Kammer (11) angeordneten, zum Kammergrund (25) beabstandeten Distanzblechs (26) ausgebildet sind.
